# EUROPEAN PATENT APPLICATION

(11) **EP 4 846 838 A1**
(43) Date of publication of application: **02.12.2026**
(21) Application number: 24768884.9
(22) Date of filing: 06.06.2024
(51) Int. Cl.: A01G 25/00, A01G 7/00, A01G 22/22, G06Q 50/02

(54) **RICE CULTIVATION MANAGEMENT DEVICE, RICE CULTIVATION MANAGEMENT METHOD, AND RICE CULTIVATION MANAGEMENT SYSTEM**

(30) Priority: 31.10.2023 JP 2023186182
(71) Applicant: Creattura Co., Ltd., Tokyo 107-0052 (JP)
(72) Inventor: BROWN, Zachary Thomas, Tokyo 107-0052 (JP); DECLARO, Alexis Brucal, Tokyo 107-0052 (JP)
(74) Representative: Herrero & Asociados, S.L.
(86) International application number: PCT/JP2024/020607
(87) International publication number: WO 2025/094439

(57) **Abstract**

A rice agriculture management apparatus which includes: a satellite data acquisition unit that acquires one or more types of satellite data for a paddy; a water index calculation unit that calculates a daily water index for each of water management plots in the paddy based on the satellite data; and a status classification unit that classifies a daily status of each of the water management plots based on the water index.

## Description

### Technical Field

The present disclosure relates to a rice agriculture management apparatus, a rice agriculture management method, and a rice agriculture management system.

### Background Art

Carbon credits have been spreading in recent years. According to the carbon credit system, business owners (credit generators) create credits by implementing projects that reduce greenhouse gases or increase absorption of greenhouse gases. Meanwhile, companies, local governments, and individuals (credit buyers) purchase the credits and use them for carbon offsets, compliance with laws and regulations, and other purposes.

Carbon credits are the primary economic tool for providing incentives to farmers to shift from traditionally irrigated rice agriculture to rice agriculture with reduced greenhouse gas emissions, e.g. alternate wetting & drying (AWD). In order to issue carbon credits with market value, it is essential to accurately calculate the amount of avoided greenhouse gas emissions.

Meanwhile, there is a known method of using satellite data to determine when to start irrigation of paddy (Non-Patent Literature 1).

### Citation List

### Non-Patent Literature

[Non-Patent Literature 1] Masato Fukumoto, "Extensive analysis of the periods when irrigation starts in individual paddy fields using Sentinel-2 satellite data", [online], March 5, 2019, Systems Agricultural Science (J. JASS), 35(2):15-23, 2019, [retrieved September 21, 2023], Internet. <URL: https://www. jstage. jst. go. jp/article/jass/35/2/35_15/_pdf/- char/ja>

### Disclosure of Invention

### Technical Problem

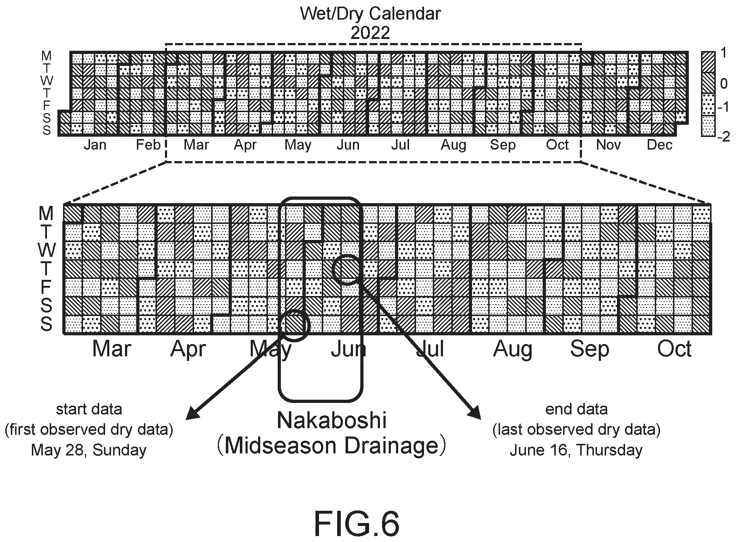

According to Non-Patent Literature 1, satellite data observed during clear weather from April to June is used to ascertain the timing of the start of irrigation of paddy for each span of about one week (Fig. 6), in order to know the actual use status of water for agricultural purposes. Meanwhile, since Non-Patent Literature 1 uses satellite data obtained during clear weather, Non-Patent Literature 1 does not teach how to know the status of irrigation in more specific and shorter spans such as one day (p. 22, "5. Conclusion"). Further, the purpose is to know the actual use status of water for agricultural purposes (p. 15, "1. Introduction"). Since it is not possible to determine the status of irrigation in a shorter and more specific span such as a day, it is not possible to estimate greenhouse gas emissions from paddy on a daily basis, for example.

In view of the circumstances as described above, it is desirable to estimate greenhouse gas emissions from paddy for a purpose of creating carbon credits.

### Solution to Problem

According to an embodiment of the present disclosure, there are provided a rice agriculture management apparatus, a rice agriculture management method, and a rice agriculture management system. The rice agriculture management apparatus includes: a satellite data acquisition unit that acquires one or more types of satellite data of a paddy; a water index calculation unit that calculates a daily water index for each of water management plots in the paddy based on the satellite data; and a status classification unit that classifies a daily status of each of the water management plots based on the water index.

According to the present disclosure, it is possible to estimate greenhouse gas emissions from paddy for the purpose of generating carbon credits.

The effects described herein are not necessarily limited to any of the effects described in the present disclosure.

### Brief Description of Drawings

[Fig. 1] A configuration of a rice agriculture management system according to an embodiment of the present disclosure.
[Fig. 2] An operation flow of the rice agriculture management system.
[Fig. 3] A machine learning model.
[Fig. 4] An algorithm of a status classification unit.
[Fig. 5] A calendar for each of water management plots.
[Fig. 6] An example of a calendar displaying a drainage period (nakaboshi in Japanese) analyzed by the analysis unit superimposed on the calendar.
[Fig. 7] An example of drainage periods (intermittent irrigation) analyzed by the analysis unit.
[Fig. 8] A daily status that can be more accurately classified based on satellite data from multiple satellite data sources.
[Fig. 9] A field water tube.

### Mode(s) for Carrying Out the Invention

The following is a description of embodiments of the present disclosure with reference to the drawings.

### 1. Background of the present embodiment

Rice is a staple food for more than half the world's population, but it is also a significant source of greenhouse gas (GHG) emissions. Rice agriculture is responsible for as much as 12% of global anthropogenic methane (CH4) emissions. (https://www.bloomberg.com/news/articles/2019-06-03/your-bowl-of-rice-is-hurting-the-climate-too#xj4y7vzkg). Given the current state of global warming, there is increasing urgency to broadly establish sustainable agricultural methods in the rice producing regions of the world as a strategy to mitigate global greenhouse gas emissions.

There is known a water management and adjustment technique called AWD (Alternate Wetting and Drying). In contrast to continuous irrigation where a rice paddy remains flooded throughout the growing season, AWD is an adjusted water management technique where water is temporarily drained from the paddy exposing the soil to air. There are two known representative methods of AWD, i.e., mid-season drainage (so-called nakaboshi in Japanese), a technique where the paddy undergoes a single drainage period, and intermittent irrigation where a paddy is drained and re-flooded in multiple alternating cycles throughout the growing season. The mid-season drainage technique (i.e., draining water from the paddy once during the growing season to dry the surface of the paddy before ear emergence) prevents excessive offshooting (branching from the root base) and controls the growth of rice plants.

In both AWD cases, exposing the soil to oxygen halts the anaerobic decomposition of soil organic matter reducing methane emissions. Therefore, if the drainage period (for example, the period of mid-season drainage) is extended longer than the past, methane emissions from the soil are reduced. Thus, greenhouse gas emissions from paddy rice can be reduced by adjusting water management.

Meanwhile, carbon credits have been spreading in recent years. According to the carbon credit system, business owners (credit generators) create credits by implementing projects that reduce greenhouse gases or increase absorption of greenhouse gases. Meanwhile, companies, local governments, and individuals (credit buyers) purchase the credits and use them for carbon offsets and other purposes.

Carbon credits are the primary economic tool for providing incentives to farmers to shift from rice agriculture without AWD to rice agriculture with AWD. For carbon credits to be traded effectively, the carbon credits must be reliable and have market value. In order to issue carbon credits with market value, it is essential to accurately calculate the amount of avoided greenhouse gas emissions.

In Japan, there is a national credit certification system called "J-Credit," under which the government certifies credits to business owners (for example, rice farmers) when the extension of the mid-season drainage period in rice agriculture meets certain conditions (https://japancredit.go.jp/pdf/methodology/AG-005_v1.0.pdf). Specifically, if the mid-season drainage period in rice agriculture is extended for at least 7 days longer than the average number of days of mid-season drainage in the project paddy over the last two years prior to the project implementation, the credit application can be certified. If the credit application is certified, the value of the credit is calculated based on the difference between the baseline emissions (the emissions that would have occurred if the drainage period had not been extended) and the post-project emissions (the emissions that would have occurred if the drainage period had been extended).

To prove that greenhouse gas emissions have been reduced relative to baseline emissions (additionality), first, it must be proved that the project did not execute drainage period extension (or did not have a drainage period) prior to the start of the project (baseline period). Second, it must be proved that the extended drainage period is executed during the project period. That is, in order to receive credit certification, the drainage periods must be accurately proved over a period of several years.

In addition, the accuracy of the drainage period (the period during which the paddy is free of water) allows for accurate calculation of greenhouse gas emissions. For example, when a farmer artificially drains and re-floods a paddy, if it rains and water accumulates in the paddy during the drainage period, avoided greenhouse gas emissions will decrease (i.e., reduction will be smaller). Since the value of the credit depends on the amount of greenhouse gas emissions, to accurately calculate the value of the credit, it is necessary to accurately determine not only the period of artificial drainage due to artificial drainage and re-flooding, but also the presence or absence and amount of water in the paddy due to factors such as rainfall, paddy drainage ability, paddy water management, etc.

In general, a logbook (diary) is a means of proving the duration of drainage, in which a farmer records the date when the farmer flooded or drained a paddy. However, relying solely on logbooks to receive carbon credits is a problem. First, at the start of a new project, there may be no logbooks for the baseline period (several years ago). Second, the accuracy and authenticity of the logbooks may be questionable due to the financial incentives offered. Third, even if a farmer accurately records a logbook, the farmer's own actions (e.g., dates of opening and closing irrigation and drainage gates) are generally recorded, whereas the presence of water from rainfall, for example, may not be recorded in the logbook because it is not based on the farmer's own actions. However, in order to accurately calculate greenhouse gas emissions, it is necessary to objectively clarify the actual condition of the paddy (presence or absence of water, amount of water) at a specific point in time.

Precision in greenhouse gas emissions quantification is especially important issue. For example, there is known the United Nations Framework Convention on Climate Change (UNFCCC)'s Clean Development Mechanism (CDM) rice farming methodology (https://cdm.unfccc.int/methodologies/DB/D14KAKRJEW4OTHEA 4YJICOHM26M6BM). Quality issues have raised by stakeholders regarding the CDM rice methodology. (https://verra. org/verra-inactivates-unfccc-cdm-rice-agriculture-methodology/).

Process-based computer models, such as the Denitrification-Decomposition model (DNDC) developed at University of New Hampshire, are commonly used to simulate the complex biogeochemical interactions between crops, soils, irrigation, fertilizers, etc. and can be used to estimate GHG emissions from rice paddies. These models are already employed in rice paddy methane reduction methodologies for carbon credits, but they are generally based on broad estimates and season-long averages, limiting their precision.

In view of the circumstances as described above, according to an embodiment of the present disclosure, in order to enable farmers to obtain appropriate certification of carbon credits, the dry period of a paddy that have not been affected by artificial drainage and rainfall is analyzed on a daily basis over years, to reliably prove drainage periods implemented over a period of years.

### 2. Configuration of rice agriculture management system

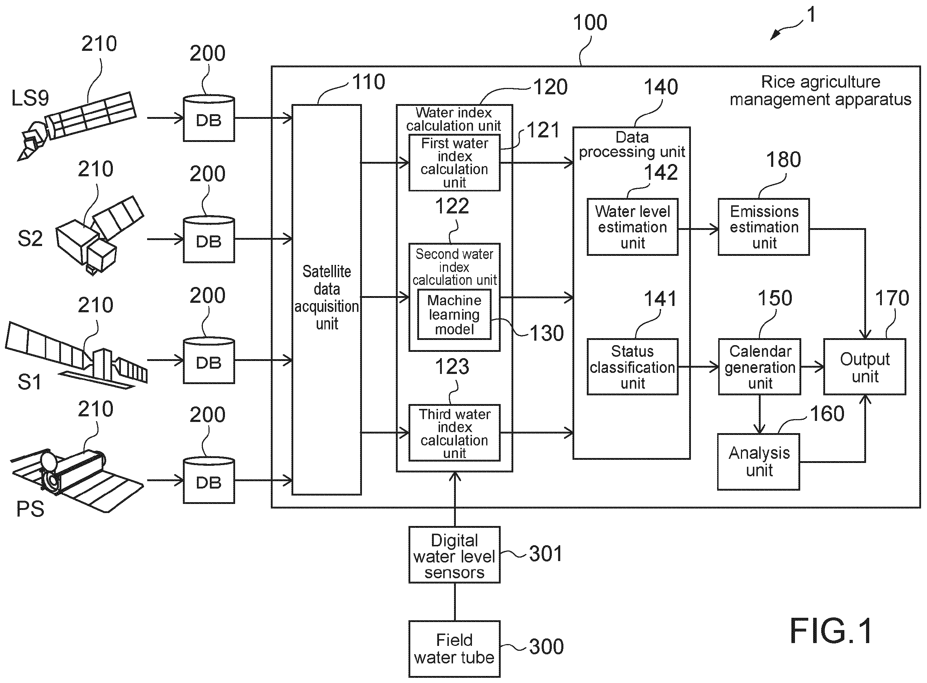

Fig. 1 shows a rice agriculture management system according to an embodiment of the present disclosure.

The rice agriculture management system 1 obtains satellite data of a paddy acquired by each of the satellites 210 from the satellite databases 200 via a network such as the Internet. The rice management system 1 performs arithmetic processing based on the satellite data. The rice management system 1 outputs the calculation results via a network such as the Internet.

The rice agriculture management system 1 includes a satellite data acquisition unit 110, a water index calculation unit 120, a data processing unit 140, a calendar generation unit 150, an analysis unit 160, an output unit 170, and an emissions estimation unit 180. In one information processing apparatus functioning as a server (rice agriculture management apparatus 100), a processor may function as the satellite data acquisition unit 110, the water index calculation unit 120, the data processing unit 140, the calendar generation unit 150, the analysis unit 160, and the output unit 170 by loading information processing programs recorded in ROM into RAM and executing them. Alternatively, a plurality of distributed information processing apparatuses may work collaboratively to function as the satellite data acquisition unit 110, the water index calculation unit 120, the data processing unit 140, the calendar generation unit 150, the analysis unit 160, the output unit 170, and the emissions estimation unit 180.

The plurality of kinds of satellites 210 have different detection characteristics and acquire satellite data with different characteristics. The plurality of kinds of satellites 210 can be, for example, Sentinel-2 (referred to as S2), LandSat-9 (referred to as LS9), Sentinel-1 (referred to as S1), and PlanetScope (referred to as PS).

The wavelength bands of S2 are visible light, near infrared (NIR), and shortwave infrared (SWIR). S2 has a revisit frequency of 5 days above the equator and a resolution of 10 m to 60 m.

The wavelength bands of LS9 are visible light, near infrared (NIR), and shortwave infrared (SWIR). LS9 has a revisit frequency of 16 days and a resolution of 30 meters.

S1 has a synthetic aperture radar (SAR), which irradiates microwaves (electromagnetic waves) onto an object and receives the reflected (backscattered) signal. S1 satellite data (SAR backscatter) includes VV polarization (vertical output, vertical reception) and VH polarization (vertical output, horizontal reception). The return period of S1 is 12 days and the resolution is 10 m.

The wavelength bands of PS are visible light and near infrared (NIR), but not shortwave infrared (SWIR). The plurality of kinds of satellites 210 are not limited to the above, for example, other satellites 210 may be used in addition. Also, some of the above may not be used (for example, PS may not be used). In that case, the third water index calculation unit 123 described below may not be provided.

### 3. Operation of rice agriculture management system

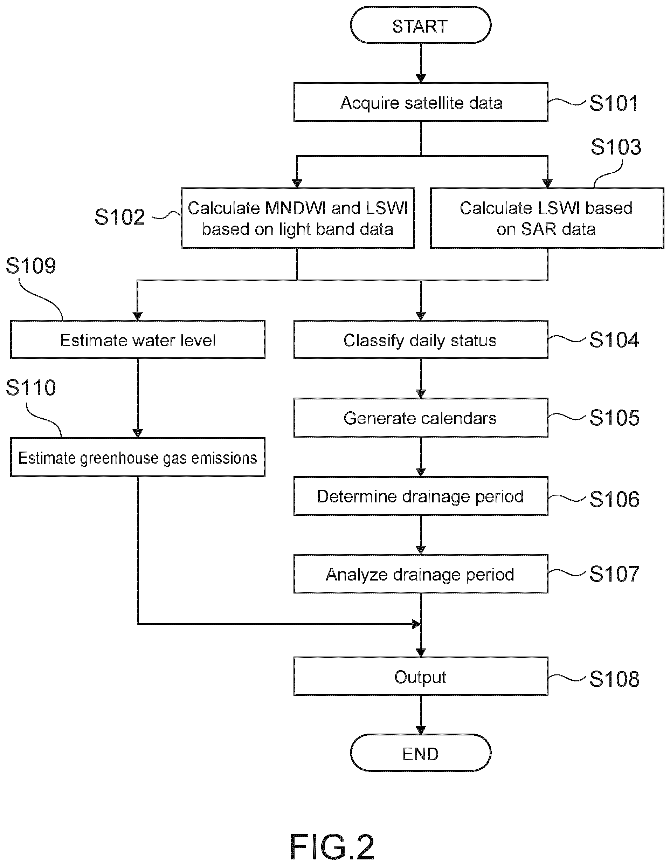

Fig. 2 shows an operation flow of the rice agriculture management system.

The satellite data acquisition unit 110 acquires satellite data of a paddy acquired by each of the plurality of kinds of satellites 210 (S2, S1, LS9) from the satellite databases 200 via a network such as the Internet (Step S101).

The water index calculation unit 120 calculates the daily water index for each of water management plots in a paddy based on satellite data (optical band data) from the plurality of kinds of satellites 210 (S2, S1, LS9). Water management plots are defined as plots where appropriate water management is possible, in the present specification. A water management plot can be, for example, a paddy field area (the largest plot for which appropriate water management is possible). The water index calculation unit 120 has a first water index calculation unit 121, a second water index calculation unit 122, and a third water index calculation unit 123.

The first water index calculation unit 121 calculates two types of water indices for each of the water management plots in the paddy based on the S2 satellite data of reflected light band data (visible light, near infrared (NIR), and shortwave infrared (SWIR)) (Step S102). The two types of water indices are modified normalized difference water index (MNDWI) and land surface water index (LSWI). MNDWI is calculated by MNDWI=(Green-SWIR)/(Green+SWIR) (Green is the green band). LSWI is calculated by LSWI=(nir-swir)/(nir+swir). MNDWI is effective in detecting surface water, but it is difficult to detect surface water when rice plants grow above the water level. LSWI, meanwhile, can more adequately detect water presence (by quantifying the presence of water in vegetation) during periods when the rice is above the water level, such as later in the rice agriculture season.

The first water index calculation unit 121 calculates the water indices (MNDWI and LSWI) for each of the water management plots in the paddy based on the LS9 satellite data of reflected light band data (visible light, near infrared (NIR) and shortwave infrared (SWIR)) in the same manner as above.

The third water index calculation unit 123 calculates the water index for each of the water management plots in the paddy based on the PS satellite data of reflected light band data (visible light and near infrared (NIR)). The detectable wavelength bands of PS are visible light and near infrared (NIR), not including shortwave infrared (SWIR). Therefore, it is not possible to calculate MNDWI and LSWI based solely on PS satellite data. In this case, the third water index calculation unit 123 can use machine learning to identify the correlation between the visible and near infrared (NIR) data and the water indices (MNDWI and LSWI). For example, the third water index calculation unit 123 may calculate the correlation between the visible light band and the expected wet/dry values by using, for example, a neural network trained with the logbook as training data. This allows for the detection of water indices (MNDWI and LSWI) based on PS satellite data. The training data can be data from the field water tube 300 and/or digital water level sensor 301, described below.

The second water index calculation unit 122 calculates the water index for each of the plurality of water management plots in the paddy based on the satellite data of S1, i.e., the synthetic aperture radar data (Step S103). Specifically, the second water index calculation unit 122 includes a machine learning model 130 for calculating the LSWI from the synthetic aperture radar data of S1. The satellite data of S1 (SAR backscatter) includes VV polarization (vertical output, vertical reception) and VH polarization (vertical output, horizontal reception). The VV polarization is used for detection of the roughness and structure of the surface. The VH polarization is used for detection of the moisture content of the surface. Radar is independent of visible light and passes through clouds. Therefore, unlike the S2, LS9, and PS satellite data (optical band data), it may not be affected by clouds. Therefore, the S1 satellite data (radar data) can augment the MNDWI and LSWI based on the S2, LS9, and PS satellite data (optical band data).

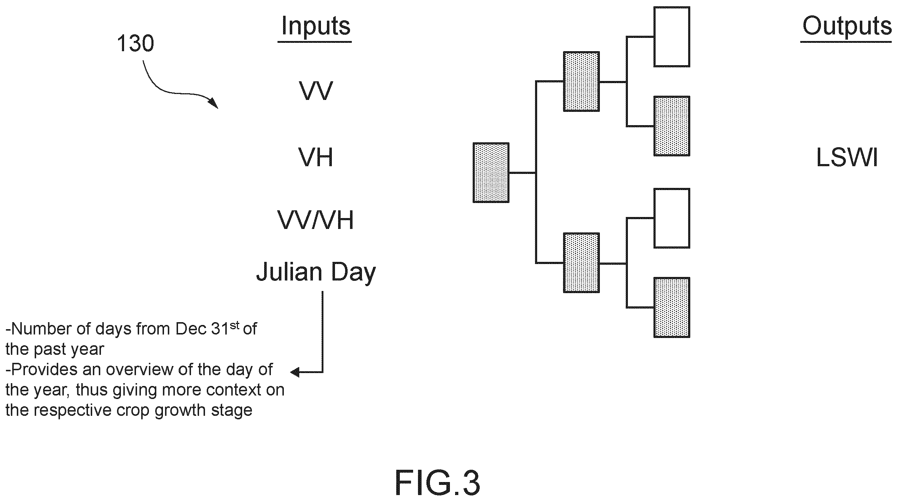

Fig. 3 shows the machine learning model.

The machine learning model 130 is obtained by training the VV backscatter coefficient and VH backscatter coefficient, ratio VV/VH and Julian day (number of days from the 31^{st} December of the previous year) based on synthetic aperture radar data and the LSWI values to obtain representative index values for radar data through a simple neural network. The XGBoost machine learning algorithm can be used to improve the accuracy of the correlations in the machine learning model 130. XGBoost is a decision tree-based supervised machine learning algorithm for regression days and classification problems.

The second water index calculation unit 122 inputs the VV backscatter coefficient and VH backscatter coefficient, the ratio VV/VH and the date (Julian day) based on the synthetic aperture radar data to the machine learning model 130. The machine learning model 130 outputs the LSWI.

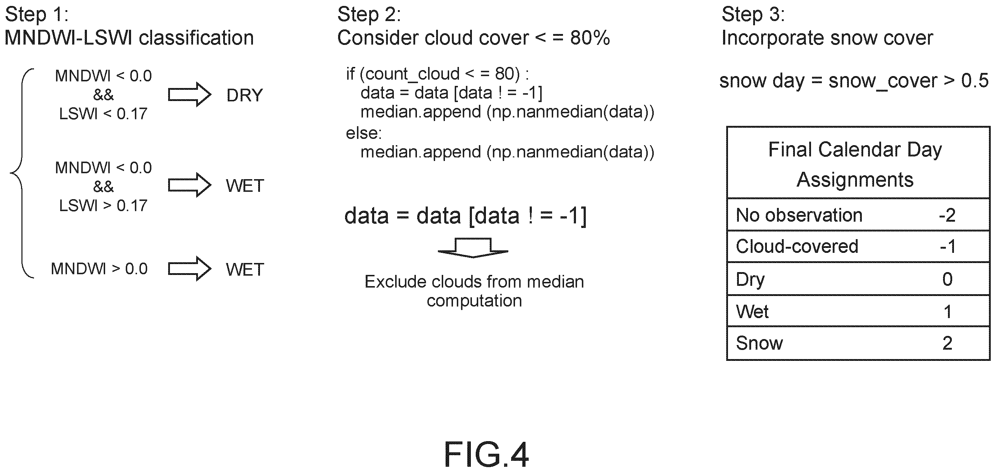

Fig. 4 shows the algorithm of the status classification unit.

The data processing unit 140 has a status classification unit 141 and a water level estimation unit 142. The status classification unit 141 classifies the daily status of each of the water management plots based on the MNDWI and LSWI calculated by the first water index calculation unit 121 and the third water index calculation unit 123, and the LSWI calculated by the second water index calculation unit 122 (Step S104).

There are five daily statuses, for example, Dry, Wet, Cloud-covered, Snow, or No satellite observation. The algorithm for detecting Snow (Step 3 below) may not be performed depending on the climate of the area where the paddy is located.

The status classification unit 141 performs threshold processing on the MNDWI and LSWI calculated by the first water index calculation unit 121 and the third water index calculation unit 123. If MNDWI<0.0 and LSWI<0.17, the status is likely to be dry. If MNDWI<0.0 and LSWI>0.17 and if MNDWI>0.0, the status is likely to be wet.

The status classification unit 141 performs a threshold process on the LSWI calculated by the second water index calculation unit 122. If the LSWI<0.17, the status is likely to be dry. If the LSWI>0.17, the status is likely to be wet.

The status classification unit 141 determines whether the status is wet or dry based on the threshold process for MNDWI and LSWI calculated by the first water index calculation unit 121 and the third water index calculation unit 123 and the threshold process for LSWI calculated by the second water index calculation unit 122. It is possible that the results of the threshold processing of the first water index calculation unit 121 and the third water index calculation unit 123 may differ from the results of the threshold processing of the second water index calculation unit 122. Therefore, the status classification unit 141 should be trained in advance to determine whether wet or dry is occurring from the threshold processing of the first water index calculation unit 121, the second water index calculation unit 122, and the third water index calculation unit 123. In addition, each of the plurality of kinds of satellites 210 has each number of revisit frequency (5 days for S2 and 16 days for LS9). Therefore, there can be days when only one of the satellites 210 can obtain satellite data for a paddy and the other cannot. In such a case, the status classification unit 141 can determine whether the paddy is wet or dry based on the satellite data obtained.

Thus, as a first step, the status classification unit 141 uses a plurality of levels threshold algorithm utilizing two types of water indices (MNDWI and LSWI) to identify whether it is wet or dry. The MNDWI threshold (0.0) and LSWI threshold (0.17) will be described. The general threshold used to detect water for the MNDWI is 0. MNDWI greater than 0 indicates the presence of water, while MNDWI less than 0 indicates the absence of water. LSWI, meanwhile, has no such specified threshold. Therefore, when training the algorithm, farmer's logbook data should be used as training data to determine the LSWI threshold that returns the most accurate results.

Not only farmers' logbooks, but also digital water level sensors 301 (IoT sensors) installed in a paddy can be used to collect training data for machine learning.

There are techniques to digitally measure the water level of a paddy frequently (for example, daily or more) using a digital water level sensor 301 that is more accurate than a farmer's logbook. Such sensors are usually mounted above the maximum water level of the paddy and measure water level using ultrasound or electric eye sensor reflections. The collected data may be transmitted wirelessly to a central database or stored locally requiring periodic data downloads.

However, it is impractical and may be expensive to introduce digital water level sensors 301 to monitor all individual paddies in a project. Meanwhile, if the digital water level sensor 301 is introduced to a representative sample of paddy in the present embodiment, training data for the neural network to detect water levels from satellites can be generated. This allows data to be collected in a more accurate and cost-effective manner.

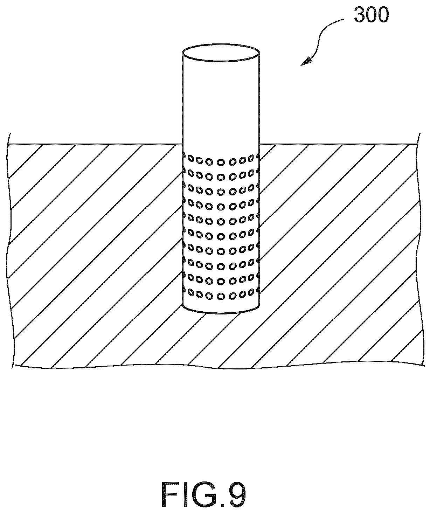

Fig. 9 shows a field water tube.

A field water tube 300 may be used to monitor the water level of the paddy. The field water tube 300 is a hollow cylindrical tube that is vertically embedded in the soil with no soil inside the field water tube 300. The lower portion embedded in the soil is provided with punch holes that allow water to flow in and out. When water is above the soil surface, water collects in the upper portion of the field water tube 300 (the portion without punch holes) and a positive water level can be measured. Meanwhile, when water is below the soil surface, water in the soil flows into the interior of the field water tube 300 through the punch holes, water accumulates in the lower part of the field water tube 300 (the part with the punch holes) and a negative water level can be measured. In this way, the field water tube 300 can be used to check positive and negative water levels. In AWD practices where the soil drains to -15 cm, the field water tube 300 becomes important in determining when to re-flood the field. The digital water level sensor 301, in combination with the field water tube 300, can be used to digitally measure both positive (when water is above ground) and negative (when water is below ground) values.

Digital data sets of positive and negative water levels from a representative sample of a paddy can be used as training data (instead of farmer logbooks) to estimate water levels in a paddy with higher accuracy. In this scenario, a neural network can be executed on all bands collected from each satellite source to generate individual correlations for each set of source data without having to use water indices such as MNDWI or LSWI to accurately predict water levels in centimeter.

The use of the digital water level sensor 301 provides a new and reliable source of information for training machine learning algorithms on satellite data. Furthermore, the algorithm can be used to generate a calendar of accurate water levels for each paddy. Additionally, the above creates the function to observe beneath the soil surface and detect negative water levels. Since intermittent irrigation techniques stipulate, that water be drained to 15 cm below the soil surface, machine learning based on supervised data from digital sensor data could provide reinforcement that the drainage period is being implemented correctly.

In the second step, the status classification unit 141 determines the status as cloud-covered, excluding from the median calculation process if clouds occupy 80% or more, based on the satellite data from S1, S2, LS9, and PS. The status classification unit 141, which has already determined in the first step whether wet or dry, can determine the status to be cloud-covered if clouds occupy 80% or more. This eliminates the possibility of misrecognizing whether wet or dry is occurring on a cloud-covered day.

In the third step, the status classification unit 141 determines the status to be snow if the snow covers are more than 50%. Although the status classification unit 141 has already determined in the first step whether wet or dry, it is sufficient to determine that the status is snow if the snow covers are more than 50%. This eliminates the possibility of misidentifying the status as wet on a day of snow.

Thus, the status classification unit 141 determines wet or dry as the daily status in the first step. If the status classification unit 141 determines cloud-covered and snow in the second and third steps, it updates the wet or dry in the first step with cloud-covered or snow.

Furthermore, as mentioned above, each of the plurality of kinds of satellites 210 has its own return frequency (S2 has 5 days, LS9 has 16 days, and S1 has 12 days). Therefore, there can be days when any of the satellites 210 (S2, LS9, PS, and S1) cannot observe paddy. In such a case, the status classification unit 141 determines that the status of each day is no observation.

Meanwhile, the water level estimation unit 142 uses the data collected from the field water tube 300 and the digital water level sensor 301 as a training data set for the neural network and combines it with the satellite data. In this way, the water level estimation unit 142 estimates the daily positive and negative water levels (Step S109). Machine learning allows the water level estimation unit 142 to estimate the daily positive or negative water level (cm) of the paddy from satellite data alone, even if the water level is below the soil surface (-15 cm below, for example).

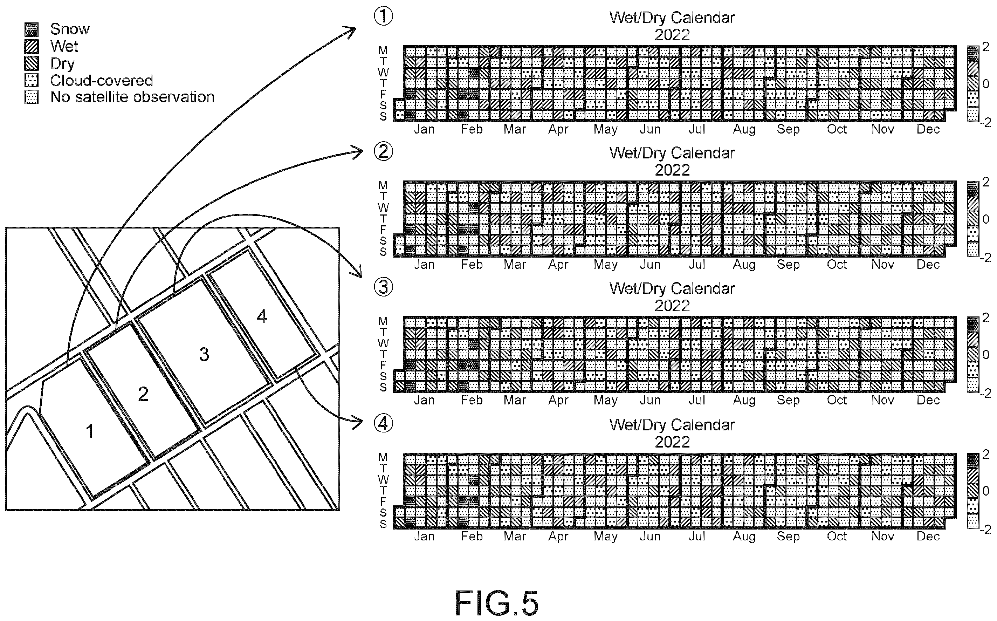

Fig. 5 shows the calendar for each of the water management plots.

Meanwhile, the calendar generation unit 150 generates calendars C1 to C4 (Step S105) that separately display the daily statuses (5 types, i.e., dry, wet, cloud-covered, snow or no observation) of the water management plots 1 to 4, as classified by the status classification unit 141. The calendar can be a time series daily database.

A calendar is a two-dimensional matrix of cells in a continuous grid. One cell in the calendar represents one day. The cells are continuous from the first day to the last day without omitting a single day. One axis of the two-dimensional matrix of the calendar indicates weeks, and the other axis continuously indicates a year without separating the continuous months in an array (arrangement). In this example, the vertical axis has seven cells, where one cell corresponds to one day, and one week is shown from Monday to Sunday from top to bottom on the vertical axis. The horizontal axis shows the year from January 1 to December 31 continuously from left to right on the horizontal axis without separating the continuous months (without making them independent or separated from each other in the arrangement). In a calendar, the cells of continuous months are arranged in a continuous manner, but as in this example, adjacent months may be separated by different line types (bold lines in this example) for the sake of calendar functionality (easy recognition of the day of the month). If the calendar already has functionality as a calendar (month and day are clear), such as by writing the month and day in numerals in the cells, adjacent months do not need to be separated by different line types.

The calendar displays different statuses in different patterns (e.g., different colors, different hatching, etc.) to fill (filled with patterns) the cells, thereby clearly separating the statuses visually from day to day. There are five statuses for example, i.e., Dry, Wet, Cloud-covered, Snow, or No satellite observation. Four statuses without Snow may be used, depending on the climate of the area where the paddy is located.

Fig. 6 shows a calendar displaying a drainage period (nakaboshi in Japanese) analyzed by the analysis unit superimposed on the calendar.

The analysis unit 160 determines, as a drainage period, a period of the largest number of days among periods each including at least a predetermined number of continuous days during a specific time period (e.g., April through September, the growing season for rice), including no wet days, having the ratio of dry days in the period equal to or larger than a threshold value, and including both the first day and the last day being dry days (Step S106). In this example, the analysis unit 160 determines, as a drainage period (nakaboshi in Japanese), a period of the largest number of days among periods each including at least a predetermined number of continuous days (e.g., 5 days) during a specific time period (e.g., April through September), including no wet days, having the ratio of dry days (11/19 days) in the period equal to or larger than a threshold value (e.g., 50%), and including both the first day (May 28, Sunday) and the last day (June 16, Thursday) being dry days.

The threshold (e.g., 50%) may be determined based on the cycle, number of days, etc., of days on which none of the satellites 210 can observe the paddy due to the revisit interval (5 days for S2, 16 days for LS9, 12 days for S1) for the plurality of types of satellites 210. The reason why both the first day and the last day need to be dry days is because, for example, the status of Friday, June 17 is no observation, so it may actually be a dry day, but the status of Saturday, June 18 is wet, so Friday, June 17 may also be a wet day. Therefore, it is more reliable to determine that the last day of the drainage period is Thursday, June 16, a dry day, instead of including Friday, June 17 in the drainage period.

Thus, a daily calendar of wet and dry data can be used to determine the start and end dates of mid-season drainage (nakaboshi in Japanese). Mid-season drainage is usually executed in June to July. Therefore, the analysis unit 160 searches for continuous periods within June to July that are drained, between wet periods. The analysis unit 160 determines the first observed dry day of the period of mid-season drainage as the start date of mid-season drainage. The analysis unit 160 determines, as the end date of the mid-season drainage period, the last dry day before the continuous wet days following the mid-season drainage period.

The calendar generation unit 150 superimposes the drainage periods (mid-drought periods) analyzed by the analysis unit 160 on a calendar in a two-dimensional matrix. For example, the calendar generation unit 150 explicitly displays the drainage period (nakaboshi period) with the first day (Sunday, May 28) and the last day (Thursday, June 16) clearly indicated on the calendar. In this specific example, the calendar generation unit 150 may circle the cells for the first day (May 28, Sunday) and the last day (June 16, Thursday) respectively, and enclose the period including the first day and the last day with, for example, a round-cornered rectangular bold line frame.

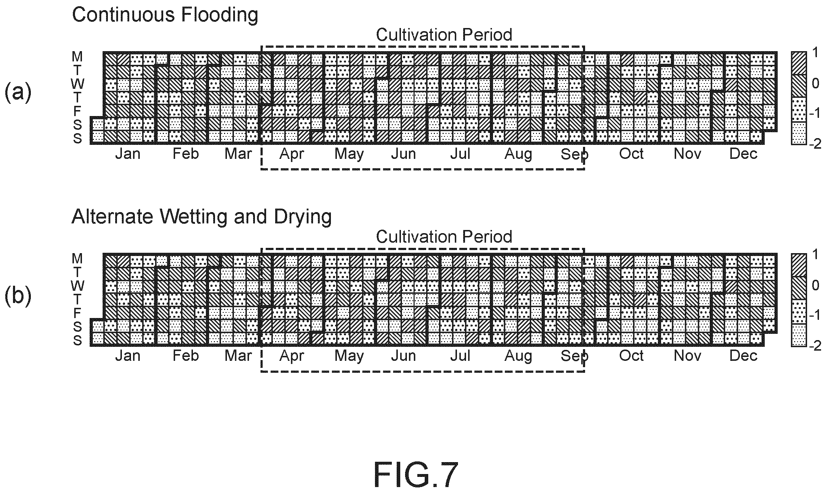

Fig. 7 shows an example of a drainage period (intermittent irrigation) analyzed by the analysis unit.

The analysis unit 160 determines, as a drainage period (intermittent irrigation period), a period of a largest number of days among periods each including at least a predetermined number of continuous days during the growing season (for example, April through September), including no wet days, having the ratio of dry days in the period equal to or larger than a threshold value, and including both the first day and the last day being dry days. The analysis unit 160 may analyze whether in a continuous irrigation, mid-season drainage (nakaboshi in Japanese), or intermittent irrigation is being implemented. The analysis unit 160 may analyze whether the farmer is following an intermittent irrigation technique (i.e., any of mid-season drainage (nakaboshi in Japanese) or intermittent irrigation). As shown in (b), intermittent irrigation involves multiple cycles of alternating drainage and re-flooding of the paddy throughout the growing season, resulting in multiple short drainage periods. The thresholds for the number of continuous predetermined days and the ratio of days of dry can be determined based on logbooks and the number of days of return periods of the plurality of kinds of satellites 210. As a comparative example, (a) shows a calendar without drainage periods (intermittent irrigation or mid-season drainage).

Thus, intermittent irrigation is a rice agriculture method in which intermittent irrigation is implemented instead of mid-season drainage (nakaboshi in Japanese). In intermittent irrigation, the field is flooded to 5 cm above soil level, and then the soil is allowed to dry until the water reaches 15 cm below soil level. When intermittent irrigation is used, the analysis unit 160 can use a daily calendar of wet and drainage data to detect alternating cycle patterns of several days in which the paddy is flooded and then drained.

The calendar generation unit 150 may display the drainage periods (plurality of periods of intermittent irrigation) analyzed by the analysis unit 160 superimposed on a calendar in a two-dimensional matrix. For example, the calendar generation unit 150 may explicitly display drainage periods (plurality of periods of intermittent irrigation) on the calendar with the first day and the last day clearly indicated.

The analysis unit 160 analyzes the drainage period for continuous years (which may or may not include this year) (Step S107). For example, the analysis unit 160 analyzes the length of the drainage period, the start date, and the presence or absence of rainfall before and after the drainage period for the continuous years. As mentioned above, under the J-credit system, if the period of mid-drainage is extended by at least 7 days longer than the average number of days of implementation over the last two or more years, the credit application can be certified. Therefore, records of the last two years as a baseline and the results of analysis between the baseline and the present are required.

For example, the analysis unit 160 may analyze the recommended start date of this year's drainage period prior to implementation of the drainage period. The analysis unit 160 may analyze, prior to implementation of the drainage period, how many more days of this year's drainage period would extend the drainage period by at least 7 days more than the average of the number of days of implementation over the last two or more years (the recommended number of days of implementation for the drainage period). The analysis unit 160 may analyze during the drainage period how many more days remaining in this year's drainage period would extend the drainage period by at least 7 days more than the average of the number of days of implementation over the last two or more years (the recommended remaining duration of the drainage period being implemented). The analysis unit 160 may analyze after the end of the drainage period that this year's drainage period has been extended by at least 7 days more than the average of the number of days of implementation over the last two or more years (whether or not the target has been met after the drainage period is implemented).

The emissions estimation unit 180 further estimates daily greenhouse gas emissions based on the daily positive and negative water levels from the water level estimation unit 142 (Step S110). The emissions estimation unit 180 may, for example, analyze the expected daily emissions of methane gas (CH4), expected daily emissions of nitrous oxide (N2O), expected daily emissions of CO2, etc. The emissions estimation unit 180 may combine environmental data (soil type, temperature, etc.) in addition to water levels and use a process-based computer model such as DNDC to estimate daily greenhouse gas emissions. The emissions estimation unit 180 may further estimate total season emissions by applying standard factors to convert CH4 and N2O to CO2 equivalent tons (tCO2e) and summing the daily emissions over the entire growing season. By subtracting the actual emissions during the project from the baseline emissions, tCO2e reductions are calculated and corresponding carbon credits are issued.

The output unit 170 outputs the calendar, analysis results, and emissions to a large-volume nonvolatile storage unit for recording. The output unit 170 may output the calendar, analysis results, and emissions in a format that can be displayed on a display unit (Step S108). The output unit 170 may output the analysis results to the terminal apparatus 300 as recommendations.

Based on the displayed calendar, the past (last year and years before last year) drainage periods can be determined. This will make it easier to determine when the future (this year) drainage period should begin and how many days it should continue, both from the perspective of being less affected by rainfall and for producing credits with reference to a baseline.

### Conclusion

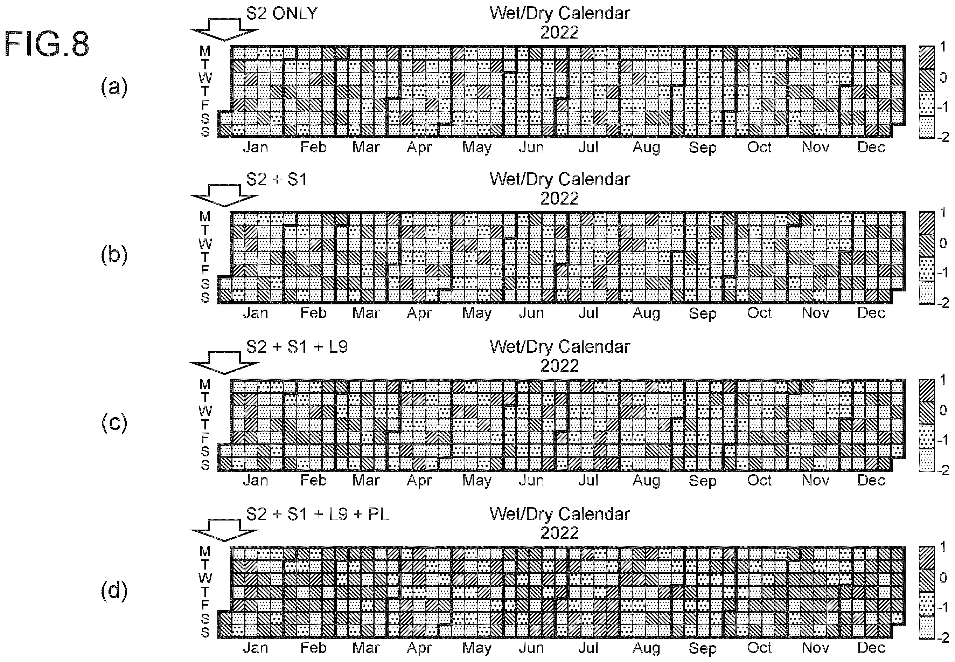

Fig. 8 shows that daily status can be more accurately classified based on satellite data from plurality of kinds of satellites.

Depending on the specific data bands collected, it is possible to detect paddy water via satellites using a variety of techniques. Satellite coverage is improving, and data providers such as Planet Labs can provide near-daily images of the earth's land surface. However, it is still necessary to combine data from plurality of satellite sources and stratify them into a single calendar in order to produce a daily data set with as few days without observations as possible. As shown in (d) of Fig. 8, when more types of satellite data are combined, the resulting calendar will have fewer no-observation days. (a) uses only S2, (b) uses S2 and S1, (c) uses S2, S1, and LS9, and (d) uses S2, S1, LS9, and Planet Labs.

Typically, the use of remote sensing in surface water mapping of rice fields is usually limited to detecting water early in the season when the height of the rice is low enough to directly observe the water. Later in the season when the rice is higher than the water level, optical band satellites and even some radar satellites cannot directly observe water through the rice vegetation.

In contrast, the present embodiment has the advantage of (1) being able to detect water under the rice plants with S1 radar data, (2) being able to detect the water with a high periodic frequency by combining plurality of satellite data, and (3) being able to detect the water with high reliability by integrating optical band and radar satellites. The present embodiment can detect surface water in the growing stage of rice throughout the year with a temporal resolution of one day from the integration of various satellite data sources.

The present embodiment allows a baseline to be established based on satellite data without the need to obtain farmers' logbooks for the period prior to the start of the project to extend the drainage period. Using the present embodiment, a daily calendar can be constructed from the history of satellite data for the years prior to the start of the project to ascertain whether the drainage period was not executed or whether it was, and to estimate the corresponding greenhouse gas emissions.

Considering that the majority of records of drainage periods for rice agriculture still rely on farmers' logbook records and given the challenges of verifying logbooks and collecting historical logbooks, the present embodiment can also be used to verify and augment farmers' logbooks.

According to the present embodiment, a process-based computer model, such as a denitrification-degradation model (DNDC, DeNitrification-DeComposition), is coupled with continuous digital measurements, more specifically, daily frequency satellite data representing the water level of each paddy. The present embodiment may be used to validate the contents of the farmer's logbook. A calendar may be used in place of the logbook as a reliable data source for water quantity data. By incorporating daily measurements, the present embodiment will be able to calculate more accurate estimates of greenhouse gas reductions compared to existing technology.

According to the embodiment, the daily status of each of the water management plots can be classified based on water indicators, the daily status data can be stored in a calendar (time series database), the data can be used to detect the water management methodology being executed, and the contents of the farmer's logbook can be verified. Furthermore, when used in conjunction with data from water level sensors, the logbook can be replaced with a calendar in the future. It can also provide a more accurate estimate of daily greenhouse gas emissions from individual paddy for the purpose of generating carbon credits.

The present embodiment allows farmers to reliably prove the drainage periods implemented over years by analyzing the dry periods of paddy unaffected by anthropogenic drainage and rainfall on a daily basis over years so that farmers can receive carbon credit certifications as appropriate. The present embodiment can directly contribute to the convenience of the farmers who actually cultivate rice (can record and analyze the past years without creating logbooks) and ultimately to their earnings (generation of valuable credits based on accurate greenhouse gas reductions). This allows, for example, the following effects to be achieved according to the present embodiment.

At the time a farmer wants to start a project to extend the drainage period, the farmer can know the history of the baseline drainage period for the past several years. This allows the project to begin promptly.

Once a project to extend the drainage period is initiated, farmers will be better able to determine the appropriate start and end dates and period lengths for this year's drainage period on their own, based on the history of the baseline drainage period over the past several years. In addition, the actual drainage period for this year will have the appropriate start and end dates and period lengths based on the history of previous drainage periods.

Reliable proof of multi-year drainage periods and, consequently, a more accurate calculation of multi-year greenhouse gas emissions are realized. Consequently, the value of carbon credits generated by farmers can be calculated more accurately.

The present embodiment will directly contribute to the convenience of farmers who actually cultivate rice, and thus to their profits.

Although each embodiment and each modified example of the present technology have been described above, the present technology is not limited only to the embodiments described above, and of course, various changes can be made within the scope that does not depart from the gist of the technology.

### Reference Signs List

- 1: rice agriculture management system
- 100: rice agriculture management apparatus
- 110: satellite data acquisition unit
- 120: water index calculation unit
- 121: first water index calculation unit
- 122: second water index calculation unit
- 123: third water index calculation unit
- 130: machine learning model
- 140: data processing unit
- 150: calendar generation unit
- 160: analysis unit
- 170: output unit
- 180: emissions estimation unit
- 200: satellite database
- 210: satellite

## Claims

1. A rice agriculture management apparatus, comprising:
a satellite data acquisition unit that acquires one or more types of satellite data of a paddy;
a water index calculation unit that calculates a daily water index for each of water management plots in the paddy based on the satellite data; and
a status classification unit that classifies a daily status of each of the water management plots based on the water index.

2. The rice agriculture management apparatus according to claim 1, wherein
the water index calculation unit includes
a first water index calculation unit and/or a third water index calculation unit that calculates a modified normalized difference water index (MNDWI) and a land surface water index (LSWI) based on optical bandwidth data being the satellite data, and
a second water index calculation unit that calculates the LSWI based on radar data being the satellite data, and
the status classification unit classifies the status based on the MNDWI and the LSWI calculated by the first water index calculation unit and/or the third water index calculation unit and based on the LSWI calculated by the second water index calculation unit.

3. The rice agriculture management apparatus according to claim 2, wherein
the first water index calculation unit calculates the MNDWI and the LSWI based on light band data of visible light, near infrared light, and shortwave infrared light, and
the third water index calculation unit calculates the MNDWI and the LSWI based on light band data of visible light and near infrared light by using a neural network.

4. The rice agriculture management apparatus according to claim 1, further comprising
a calendar generation unit that generates a calendar that displays a status of each of the water management plots on a daily basis separately.

5. The rice agriculture management apparatus according to claim 4, wherein
the status classification unit classifies the status as wet, dry, cloud-covered, snow, or no observation based on the satellite data, and
the calendar displays days of wet, dry, cloud-covered, snow, or no observation separately for each day.

6. The rice agriculture management apparatus according to claim 4, wherein
the calendar is a two-dimensional matrix of cells arrayed in a grid pattern, one cell indicates one day, the cells are continuous from a first day to a last day without omitting a single day, one axis of the two-dimensional matrix indicates weeks, and another axis continuously indicates a year without separating continuous months on an array.

7. The rice agriculture management apparatus according to claim 6, wherein
the calendar displays different statuses in different patterns by filling the cells in different patterns to display the statuses separately.

8. The rice agriculture management apparatus according to claim 6, further comprising
an analysis unit that determines, as a drainage period, a period of a largest number of days among periods each including at least a predetermined number of continuous days during a specific time period, including no wet days, having a ratio of dry days in the period equal to or larger than a threshold value, and including both a first day and a last day being dry days.

9. The rice agriculture management apparatus according to claim 8, wherein
the calendar generation unit further displays the drainage period superimposed on the calendar of the two-dimensional matrix.

10. The rice agriculture management apparatus according to claim 8, wherein
the analysis unit analyzes one of continuous irrigation, mid-season drainage (nakaboshi in Japanese), or intermittent irrigation.

11. The rice agriculture management apparatus according to claim 8, wherein
the analysis unit analyzes, by analyzing drainage periods of continuous years, a recommended start date of a future drainage period, a recommended number of days of a drainage period, a recommended remaining duration days of an ongoing drainage period, and/or whether or not a target is achieved after implementation of a drainage period.

12. The rice agriculture management apparatus according to claim 1, further comprising
a water level estimation unit that estimates daily positive and negative water levels based on the satellite data, by machine learning the satellite data by using water level measurements by an IoT sensor and/or a water tube installed in the paddy as training data.

13. The rice agriculture management apparatus according to claim 12, further comprising
an emissions estimation unit that estimates daily greenhouse gas emissions based on the daily positive and negative water levels.

14. A rice agriculture management method, comprising:
acquiring one or more types of satellite data of a paddy;
calculating a daily water index for each of water management plots in the paddy based on the satellite data; and
classifying a daily status of each of the water management plots based on the water index.

15. A rice agriculture management system, comprising:
a plurality of information processing apparatuses,
the plurality of information processing apparatuses being configured to function as
a satellite data acquisition unit that acquires one or more types of satellite data of a paddy,
a water index calculation unit that calculates a daily water index for each of water management plots in the paddy based on the satellite data, and
a status classification unit that classifies a daily status of each of the water management plots based on the water index.
